(19) Europäisches Patentamt
European Patent Office
Office européen des brevets

(11) **EP 3 200 561 B1**

(12) **EUROPEAN PATENT SPECIFICATION**

(45) Date of publication and mention
of the grant of the patent:
**29.08.2018 Bulletin 2018/35**

(51) Int Cl.:
***H05B 6/12*** *(2006.01)*

(21) Application number: **17159565.5**

(22) Date of filing: **06.10.2011**

(54) **INDUCTION-HEATING COOKING SYSTEM**

INDUKTIONSHEIZUNGS-KOCHSYSTEM

SYSTÈME DE CUISSON À CHAUFFAGE PAR INDUCTION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.11.2010 JP 2010259655**

(43) Date of publication of application:
**02.08.2017 Bulletin 2017/31**

(62) Document number(s) of the earlier application(s) in accordance with Art. 76 EPC:
**11842552.9 / 2 645 814**

(73) Proprietors:
• **Mitsubishi Electric Corporation**
  **Tokyo 100-8310 (JP)**
• **Mitsubishi Electric Home Appliance Co., Ltd.**
  **Fukaya-shi, Saitama 369-1295 (JP)**

(72) Inventors:
• **SHINDOI, Takashi**
  **Tokyo, 100-8310 (JP)**
• **SHIKAI, Masahiro**
  **Tokyo, 100-8310 (JP)**
• **SUMI, Kazuhiko**
  **Tokyo, 100-8310 (JP)**
• **TAKESHITA, Miyuki**
  **Tokyo, 100-8310 (JP)**
• **KINOSHITA, Hirokazu**
  **Saitama, 369-1295 (JP)**
• **KAMEOKA, Kazuhiro**
  **Saitama, 369-1295 (JP)**

(74) Representative: **Sajda, Wolf E.**
**Meissner Bolte Patentanwälte**
**Rechtsanwälte Partnerschaft mbB**
**Postfach 86 06 24**
**81633 München (DE)**

(56) References cited:
**EP-A1- 2 020 826      EP-A2- 0 460 279**
**WO-A1-2009/090152**

**Description**

Technical Field

The present invention relates to an induction-heating cooking system which inductively heats a single heated-subject in cooperation with a plurality of heating coils closely arranged and a controlling process thereof, and in particular, relates to an induction-heating cooking system which is operable to instantly determine material and standing situation of the heated-subject and capable to provide the heating coils with high-frequency current of optimal drive frequency, and a controlling process thereof.

Background Art

So far several induction-heating cooking systems have been proposed, for example Patent Document 1 (JP 2009-238 575 A) discloses an induction-heating cooker including a plurality of small or compact heating coils arranged in a grid pattern and a plurality of sensors arranged corresponding to one of the heating coils for detecting whether the heated-subject such as a kettle or pan, which determines an area on a top plate occupied by the heated-subject based upon outputs from the sensors so that selected ones of the heating coils around the occupied area are driven.

Another Patent Document 2 (JP 2008-293 871 A) discloses an induction-heating cooker including a plurality of small or compact heating coils also arranged in a grid pattern, a plurality of half-bridge driving circuitries (having paired switching elements) for individually provide each of the heating coils with high frequency current, and a controlling circuitry for controlling each of the driving circuitries.

The controlling circuitry of Patent Document 2 detects amounts of current running through each of the heating coils and compares them with a given threshold value so as to determine whether the pan stands over each one of the heating coils, thereby separately controlling each one of the driving circuitries for the heating coils over which the pan is set. Another induction heating cooking system of the prior art is disclosed in document WO2009/090152.

Summary of the Invention

Problems to be Solved by the Invention

However the sensors used for the induction-heating cooker disclosed in Patent Document 1 are, for example, optical sensors, each of which detects the pan standing over the corresponding coil when receiving reflection therefrom and determines no pan over the coil when receiving no reflection, and thus, those sensors are to merely determine whether or not the pan stands over each of the heating coils (existence or non-existence of the pan).

Also Patent Document 2 mentions that the amount of current through each of the heating coils is detected and compared with the given threshold value, and the pan is determined over the heating coil when the detected current is less than the predetermined threshold current, and not when the detected current is greater than that. Similarly Patent Document 2 merely suggests determining whether or not the pan stands over each of the heating coils (existence or non-existence of the pan).

Therefore, such conventional induction-heating cookers may determines simply whether the pan stand over the heating coils by means of the optical sensors but cannot determine how the pan stands on the top plate of the induction-heating cooker (standing area of the pan).

Furthermore, since the induction-heating cookers of Patent Document 1 and 2 supply a given amount of high-frequency current to the heating coils for which sensors detect the pan standing thereover, the pan bottom may be heated unevenly in accordance with the standing situation of the pan causing variation of surface temperature of the pan bottom (or electrical power applied to unit area from the heating coils), which may in turn, generates chars of food in the pan and/or partial bumping on the pan bottom.

It is well known that the pan may be formed of various material such as magnetic or non-magnetic SUS (Stainless Used Steel), iron, aluminum, and that optimized driving condition of the heating coil such as driving frequency of the high-frequency current applied to the heating coil may be varied based upon the material of the pan. Nonetheless Patent Document 2 discloses detecting amounts of current running through each of the heating coils of the induction-heating cooker, but fails to disclose and even suggest detecting the material of the pan which stands over the heating coils. Thus, the induction-heating cooker of Patent Document 2 provides the high-frequency current of constant or fixed drive frequency with the heating coils, which may prevent high heating efficiency thereof.

Means for solving problems

To address the above drawbacks, one Embodiment of the present invention is to provide an induction-heating cooking system, which comprises: a plurality (i = 2, 3...) of heating coils closely arranged for heating a single heated-subject in cooperation with one another; a plurality of drive circuitries, each one of the drive circuitries supplying high-frequency current of the same frequency individually to one of the heating coils;

a plurality of n-th order component extractors (n: natural number), each one of the n-th order component extractors extracting an n-th order drive current component of the drive current through each of the heating coils and n-th order drive voltage component of the drive voltage across each of the heating coils; and

a controller calculating a load resistance and a resonance frequency of each one of the heating coils based upon the n-th order drive current component and the n-th order drive voltage component extracted by the corresponding n-th order component extractors.

The controller according to the present invention is adapted to

a) determine whether or not the heated-subject stands over each one of the heating coils in accordance with the calculated load resistance ($R_i$) and the calculated resonance frequency ($Fr_i$) of each one of the heating coils when controlling each of the drive circuitries to supply the high-frequency current having a first detection frequency ($F_{S1}$),

b) define a drive frequency ($F_D$) as the highest one of the calculated resonance frequency ($Fr_i$) of the heating coils plus a predetermined additive frequency ($\Delta F$), and

c) control each of the drive circuitries of the heating coils which the heated-subject is determined as standing over, to supply the high-frequency current having the drive frequency ($F_D$).

Advantages of the Invention

According to the induction-heating cooking system of the present invention, each of the heating coils can be provided with a high-frequency current having a drive frequency ($F_D$) that is the resonance frequency ($Fr_i$) plus a pre-determined additive frequency ($\Delta F$), that is the optimal drive frequency to enhance the heating efficiency without a risk of the adverse impact on the switching elements of the driving circuitries, i.e., in a safe and reliable manner.

Brief Description of the Drawings

| | |
|---|---|
| FIG. 1 | is a schematic circuit block diagram of an induction-heating cooking system having a single heating coil. |
| FIG. 2 | is a waveform of drive voltage detected by a drive voltage detector, and drive current detected by a drive current detector. |
| FIGS. 3A-3C | are top plan views of disks made of various material which are set over a heating coil. |
| FIGS. 4A-4B | are maps showing the relationship between resonance frequency and load resistance of disks made of various material set at different standing position. |
| FIGS. 5A-5B | are maps showing the relationship between inductance and load resistance of disks made of various material set at different standing position. |
| FIG. 6 | is a schematic circuit block diagram of an alternative induction-heating cooking system having a single heating coil. |
| Fig 7 | is a top plan view of the heating coil of Embodiment 1 according to the present invention. |
| FIG. 8 | is a schematic circuit block diagram of an induction-heating cooking system of Embodiment 1. |
| FIG. 9 | is a flow chart illustrating a controlling process of Embodiment 1. |
| FIG. 10 | is a timing chart schematically illustrating a load detection period and a driving period in the controlling process of Embodiment 1. |
| FIG. 11 | is a flowchart illustrating a controlling process of Embodiment 2. |
| FIGS. 12A and 12B | are flowcharts illustrating a controlling process of Embodiment 2. |
| Fig 13 | is a top plan view of the heating coil of Embodiment 3. |
| Fig 14 | is a top plan view of the modified heating coil of Embodiment 3. |
| FIG. 15 | is a flowchart illustrating a controlling process of Embodiment 3. |
| FIG. 16 | is a timing chart schematically illustrating a load detection period and a driving period in the controlling process of Embodiment 3. |

Description of Embodiments

Prior to detailed description of several embodiments of an induction-heating cooking system according to the present invention, description will be made for a theoretical principle for detecting not only existence or non-existence of a heated-subject such as a pan standing over an electromagnetic heating coil (which is referred herein to simply as "heating coil"), but also standing situation (standing area) and material of the heated-subject, as well as an optimal drive frequency of high-frequency current supplied to the heating coils when the heated-subject is heated, in an instant manner or within a fraction of a second. The process for instantly detecting the above may be referred herein to simply as "load detection" or "pan detection".

Theoretical Principle of Load Detection

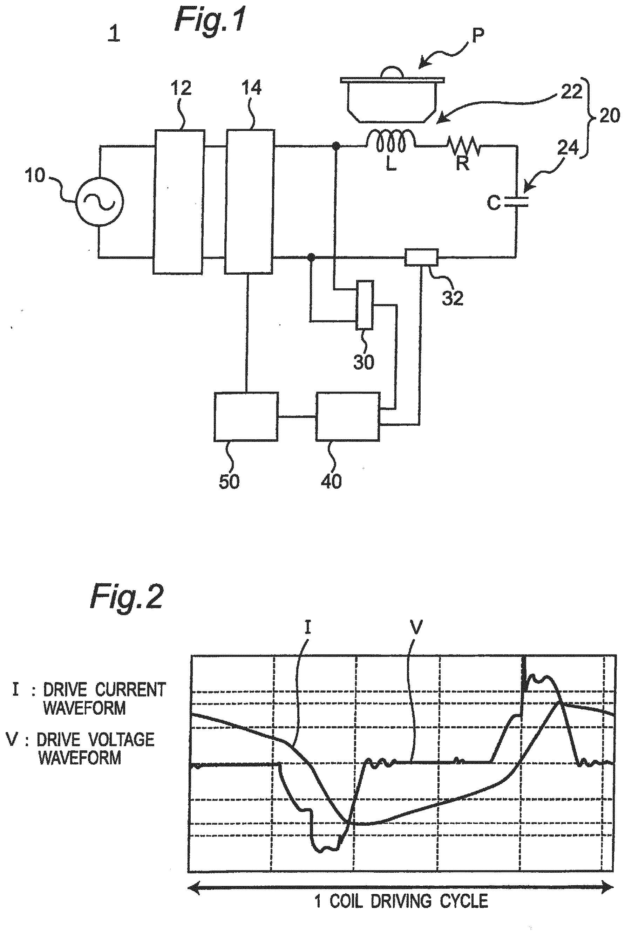

With reference to FIGS. 1 to 6, the theoretical principle of the load detection (pan detection) will be described herein in detail. FIG. 1 is a schematic circuit block diagram of an induction-heating cooking system 1 having a single heating coil. The induction-heating cooking system 1 generally includes a rectifying circuitry 12, a drive circuitry 14, a LCR induction-heater 20, a drive voltage detector 30, and a drive current detector 32. The rectifying circuitry 12 is operable to rectify single-phase or three-phase alternate current of commercial power source 10 into direct current.

The drive circuitry 14 is adapted to supply high-frequency current of a given drive frequency to a heating coil 22. The LCR induction-heater 20 is composed of the heating coil 22 and a resonance capacitor 24 connected in series each other. The drive voltage detector 30 is adapted to detect drive voltage across the LCR induction-heater 20, and the drive current detector 32 is adapted to detect drive current through the LCR induction-heater 20.

More specifically, the rectifying circuitry 12 may be adapted for full-wave or half-wave rectification, and may include a filtering circuitry having an inductance for forming direct component and a capacitor (not shown). Also, the drive circuitry 14 may be composed of an inverter having a plurality of switching elements such as IGBTs (not shown), which may be any type of inverter, for example, a half-bridge inverter circuitry and a full-bridge inverter circuitry.

As explained above, the LCR induction-heater 20 is composed of the heating coil 22 and the resonance capacitor 24 connected in series each other, and the heating coil 22 is denoted in Fig .1, as equivalent circuits of inductance **L** and load resistance **R.** In this drawing, illustrated above the inductance **L** is the heated-subject **P** such as a pan. When supplied with high-frequency current, the heating coil 22 generates an alternate magnetic field which magnetically links with the heated-subject **P** made of conductive material, and causes eddy currents within the heated-subject **P,** thereby heating the heated-subject **P** itself.

In general, the load resistance **R** of the LCR induction-heater 20 varies in accordance with existence and/or standing situation (area and set position) of the pan **P,** i.e., with alternate magnetic field which magnetically links with the pan **P.** Thus, the load resistance **R** of the LCR induction-heater 20 is equivalent to the wiring resistance $R_C$ of the heating coil 22 when no pan **P** stands over the heating coil **P,** in addition with an apparent resistance $R_L$ of the pan **P** appeared when the pan **P** is set over the heating coil (i.e., $R = R_C + R_L$).

It should be noted that any type of voltage detectors commonly known in the art may be used as the drive voltage detector 30 for detecting the drive voltage (output voltage) **V** across the LCR induction-heater 20. Also, any type of current detectors may be utilized as the drive current detector 32 for detecting the drive current (output current) **I** through the LCR induction-heater 20, such as a current transformer.

The induction-heating cooking system 1 of the present invention further includes a primary-component extractor 40 electrically connected with the drive voltage detector 30 and the drive current detector 32. As described above, while the drive circuitry 14 is an inverter having switching elements such as IGBTs (Insulated Gate Bipolar Transistors), each of the IGBTs of the drive circuitry 14 is driven by a control signal (gate signal) having a given drive frequency (30 kHz, for example), the drive voltage detector 30 and the drive current detector 32 detect the high-frequency modulated drive voltage **V** and drive current **I,** as shown in FIG. 2, which contain a plurality of order components of the drive voltage **V** and drive current **I,** respectively.

The high-frequency modulated drive voltage **V** and drive current **I** are generally expressed as a composite waveform containing multiple order components of drive voltage waveforms and drive current waveforms having higher order components of integral multiple of the drive frequency, respectively.

The primary-component extractor 40 according to the present invention is adapted to extract only the primary components of the detected drive voltage **V** and the detected drive current **I,** each of which has the same frequency as the drive frequency. The primary-component extractor 40 is adapted to extract them, by sampling data of the drive voltage **V** and the drive current **I** at a sampling frequency equal to two or more times (integral multiple) of the drive frequency, and performing a discrete Fourier transformation with the sampled data of the drive voltage **V** and the drive current **I.**

More tangibly, the primary-component extractor 40 includes an A/D converter (not shown) for converting the analog drive voltage **V** and drive current **I** into multiple digital data at the sampling frequency higher than the drive frequency to extract the primary components of the sampled drive voltage **V** and the drive current **I** from the multiple order components of sampled data of the drive voltage **V** and the drive current **I.** It should be noted that the primary-component extractor 40 may utilize any type of commercially available algorisms for extracting the primary components (first order components of sampled data) of the drive voltage **V** and the drive current **I** from the multiple order components of sampled data.

Meanwhile, the primary-component extractor 40 is designed to process the primary components of the drive voltage **V** and the drive current **I** as expressed by a complex notation as follows:

$$V_1 = V_{1\,Re} + j \times V_{1\,Im}$$
$$I_1 = I_{1\,Re} + j \times I_{1\,Im} \qquad \dots(1),$$

wherein $V_1$, $I_1$ denote the primary components of the drive voltage **V** and the drive current **I**. Also, $V_{1Re}$, $I_{1Re}$ denote real parts of $V_1$, $I_1$; while $V_{1Im}$, $I_{1Im}$ denote imaginary parts of $V_1$, $I_1$, respectively; and *j* stands as an imaginary unit.

The impedance **Z** of the LCR induction-heater 20 and the phase shift $\theta$ between the drive voltage $V_1$ and the drive current $I_1$ (the phase of the drive voltage $V_1$ over the drive current $I_1$, or the phase of the impedance **Z**) are expressed as follows:

$$Z = V_1 / I_1$$
$$\theta = \arctan\left(Im(Z) / Re(Z)\right) \qquad \dots(2),$$

wherein Im(Z) and Re(Z) denote real part and imaginary part of the impedance **Z**, respectively. The phase shift $\theta$ may be expressed with the "arcsine" or the "arccosine" instead of the "arctangent", which may be more beneficial because the "arctangent" likely diverges and contains much calculation errors at the phase shift $\theta$ close to 90°.

The induction-heating cooking system 1 of the present invention further includes a controller 50 electrically connected both to the drive circuitry 14 and the primary-component extractor 40 as illustrated in FIG. 1. The controller 50 of the present invention is adapted to calculate the impedance **Z** of the LCR induction-heater 20 and the phase shift (argument) $\theta$ between the drive voltage $V_1$ and the drive current $I_1$ based upon above Formula (2), and to apply a series of appropriate driving control signals (gate signals) to the drive circuitry 14 accordingly.

Furthermore, the controller 50 of the present invention is adapted to calculate effective electric power $W_E$ and effective current $I_E$ as follows:

$$W_E = Re(V_1 \times I_1^*) / 2$$
$$I_E = \sqrt{I_1 \times I_1^*} / \sqrt{2} \qquad \dots(3).$$

wherein $I_1^*$ is a complex conjugation of the drive current $I_1$.

As explained above, based upon the primary drive voltage $V_1$ and the primary drive current $I_1$, the controller 50 of the present invention is adapted to calculate the impedance **Z** of the LCR induction-heater 20, the phase shift (argument) $\theta$ between the primary drive voltage $V_1$ and the primary drive current $I_1$, the effective electric power $W_E$, and the effective current $I_E$.

On the other hand, in a typical LCR circuitry including the LCR induction-heater 20, parameters such as load resistance **R**, impedance **Z**, inductance **L**, and resonance frequency **Fr** of the heating coil 22 can be expressed as follows:

$$R = W_E / I_E^2$$
$$Z = R + j \times \left(\omega L - 1 / \omega C\right)$$
$$L = (R\tan\theta + 1 / \omega C) / \omega$$
$$Fr = 1 / 2\pi\sqrt{LC} \qquad \dots(4),$$

wherein $\omega$ is frequency **f** of the primary components (same as the drive frequency by definition, $\omega = 2\pi f$), and **C** is capacitance of the resonance capacitor 24, both of which are known. The controller 50 of the present invention is capable to further calculate the resonance frequency **Fr** and the load resistance **R** (= $R_C$ + $R_L$) based upon Formula (4) with the phase θ calculated by Formula (2).

Similarly, another approach may be used for calculation of the resonance frequency **Fr** as discussed herein. As explained above, the load resistance **R** and impedance **Z** are replicated as follows:

$$Z = V_1 \diagup I_1$$
$$Z = R + j \times \left(\omega L - 1 \diagup \omega C\right) \qquad \ldots(5).$$

By modifying Formula (5), the inductance **L** can be expressed as follows:

$$R = \mathrm{Re}(Z)$$
$$L = \left(\mathrm{Im}(Z) + 1 \diagup \omega C\right) \diagup \omega \qquad \ldots(6).$$

Therefore, the controller 50 is capable to calculate the resonance frequency **Fr** with the inductance **L** calculated by Formula (6) and the known capacitance **C** of the resonance capacitor 24.

$$Fr = 1 \diagup 2\pi \sqrt{LC} \qquad \ldots(7).$$

As will be discussed herein in detail, for each one of heating coils, upon calculation of the resonance frequency **Fr** (or inductance **L**) and the load resistance **R** from the primary components of the drive voltage **V** and the drive current **I,** the controller 50 of the present invention is capable to instantly determine the standing situation of the heated-subject **P** (including whether or not the pan **P** stands over the heating coil) as well as the material of the heated-subject **P,** and to control the electric power from the drive circuitries 14 in accordance with a ratio of the load resistance **R** influenced by the pan **P** for each of the heating coils.

It should be noted that the controller 50 of the present invention is adapted to calculate the resonance frequency **Fr** (or inductance **L** of the heating coil 22) and the load resistance **R,** from the primary components of the high-frequency modulated drive voltage **V** and drive current **I** detected within a single "coil driving cycle" as shown in FIG. 2 (within about 33 microseconds at the drive frequency of 30 kHz), in a quite short time period.

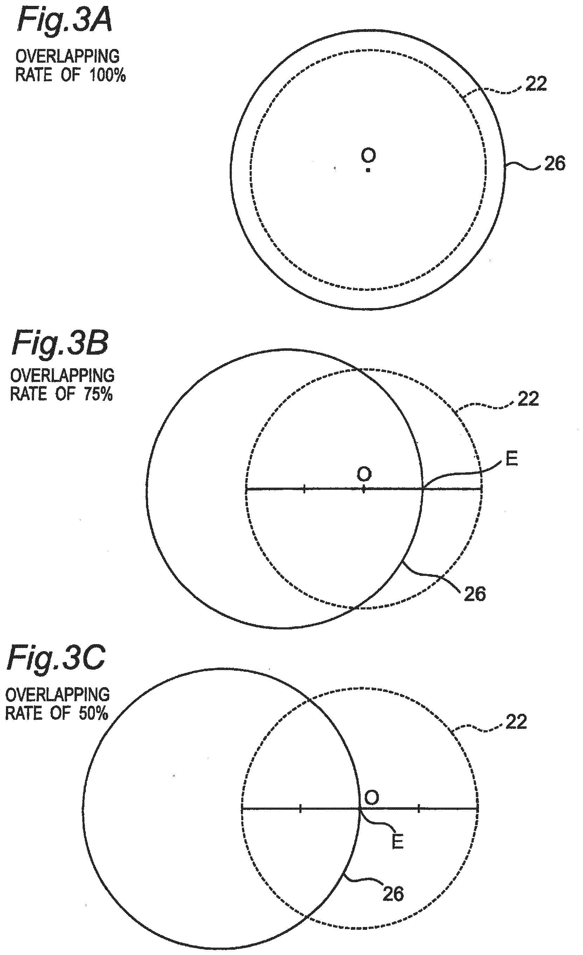

Here, detailed description will be made with some examples regarding how the controller 50 of the present invention determines the standing situation (standing area over the heating coil) of the pan **P** upon calculation of the resonance frequency **Fr** and the load resistance **R.** FIGS. 3A, 3B, and 3C are top plan views of the heating coil 22 and a plurality of disks 26 set over the heating coil.

Four disks 26 are prepared which are made of iron, magnetic stainless, non-magnetic stainless, and aluminum. Each of the disks 26 is regarded as a pseudo-pan **P.** Diameters of the heating coil 22 and the disk 26 are about 180 mm and about 200 mm, respectively, and thickness of each disk 26 is about 1.5 mm. In FIG. 3A, the disk 26 is set over a center (denoted as center O) of the heating coil 22, of which standing situation is referred to as "overlapping rate of 100 %".

Also, in FIGS. 3B and 3C, the disks 26 are set off the center so that the peripheral ends E thereof are positioned at 75 % and 50 % of the diameter of the heating coil 22, of which standing situations are referred to as "overlapping rate of 75 %" and "overlapping rate of 50 %", respectively. Thus, the standing situation with the overlapping rate of 50 % means the disk 26 having the peripheral end E of the disk 26 positioned on the center **O** of the heating coil 22.

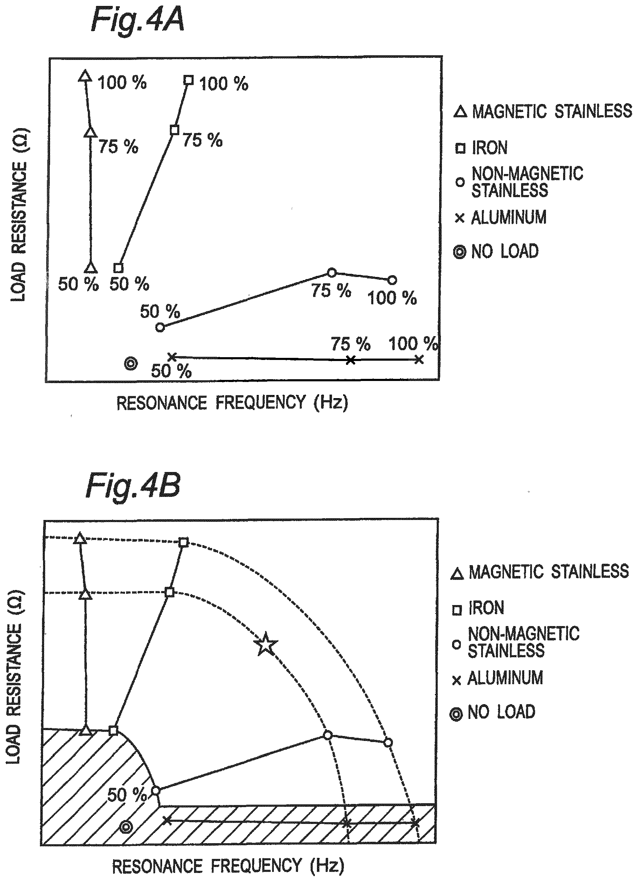

After each of the disks 26 made of iron, magnetic stainless, non-magnetic stainless, and aluminum is set over the heating coil 22 so that the overlapping rate is 100 %, 75 %, and 50 % (corresponding to FIGS. 3A, 3B, and 3C, respectively), the resonance frequency **Fr** and the load resistance **R** are calculated from the primary components of the drive voltage **V** and the drive current **I** as explained above, and plotted on a map (chart) as shown in FIG. 4A. Also, when no disk is set over the heating coil 22 (thus, the standing situation with no load), the resonance frequency **Fr** and the load resistance **R** are calculated at a point marked by a double-circle in FIGS. 4A and 4B.

In the present invention, for each of the disks 26 made of different materials, the plotted points (**Fr, R**) having the overlapping rates of 100 %, 75 % and 50 % may be lined continuously, so as to define a "drive suppression region" having the overlapping rate less than 50 % as shown by a hatching in FIG. 4B. Therefore, when detecting the point of the resonance frequency **Fr** and the load resistance **R** falling within the predetermined drive suppression region having the overlapping rate less than 50 %, the controller 50 of the present invention is operable to control the drive circuitry 14 not to supply the electric power to the LCR induction-heater 20 since it determines that the pan **P** is insufficiently set over the heating coil 22 or merely a small object stands thereon.

Apparently, the threshold of the overlapping rate for determining suppression of the electric power supply is not limited to 50 %, which may be less than 40 % or less than 60 %.

As explained above, the controller 50 of the present invention includes a memory storing the predetermined drive suppression region which prohibits supplying the high-frequency current to the LCR induction-heater 20, and is adapted to control the drive circuitry 14 allowing the high-frequency current to the LCR induction-heater 20 only when the detected parameters of the resonance frequency **Fr** and the load resistance **R** locate outside of the drive suppression region. Also, the drive suppression region may be extended over a region of lower load resistance **R** as shown in FIG. 4B not to heat the pan **P** made of aluminum. Thus, the drive suppression region may be arbitrarily adjusted or selected in accordance with its specification.

Alternatively, the memory of the controller 50 may store a function expression defining the predetermined drive suppression region with the resonance frequency **Fr** and the load resistance **R**. For example, several points (**Fr, R**) having the predetermined minimum overlapping rate, e.g., 50 %, for four disks 26 of different material such as magnetic stainless are continuously connected by a set of straight or curved lines, and the controller 50 may define and store drive suppression functions which may be linear, quadric, or higher n-th order functions (n denotes natural number greater than two) following the straight or curved lines defining the drive suppression region.

The drive suppression functions may be expressed as $R \le p_i \times Fr + q_i$, wherein $p_i$ and $q_i$ are coefficients for i = 1, 2, 3, ⋯. Thus, the controller 50 is adapted to control the drive circuitry 14 allowing the high-frequency current to the LCR induction-heater 20 only when the calculated parameters of the resonance frequency **Fr** and the load resistance **R** locate outside of the drive suppression region defined by the drive suppression functions.

Also while continuously connecting points showing the overlapping rates of 100 %, 75 % and 50 %, the overlapping rate of the disk 26 made of any material can be estimated based upon the resonance frequency **Fr** and the load resistance **R** as shown in FIG. 4B. For example, when the resonance frequency **Fr** and the load resistance **R** as plotted by a star sign in FIG. 4B, the controller 50 of the present invention determines that the pan **P** stands over the heating coil 55 at the overlapping rate of 75 % since the plotted point locates on the dashed line continuously connecting the overlapping rate of 75 %.

Furthermore, since the controller 50 of the present invention is adapted to promptly calculate the resonance frequency **Fr** and the load resistance **R** from the primary components of the high-frequency modulated drive voltage **V** and drive current **I** detected within a single cycle (within about 33 microseconds at the drive frequency of 30 kHz), so as to prevent heating the small object that is not to be heated. This secures a safer system and save electric power by eliminating the undesired power consumption at no load of the heating coil.

In other words, according to the present invention, calculation of the resonance frequency **Fr** and the load resistance **R** contributes quick determinations of the material and the standing situation of the pan **P** (i.e., how much area of the pan **P** is set over the heating coil 22) so as to facilitate heating the pan **P** under the optimal heating condition for the material and the standing situation of the pan **P.**

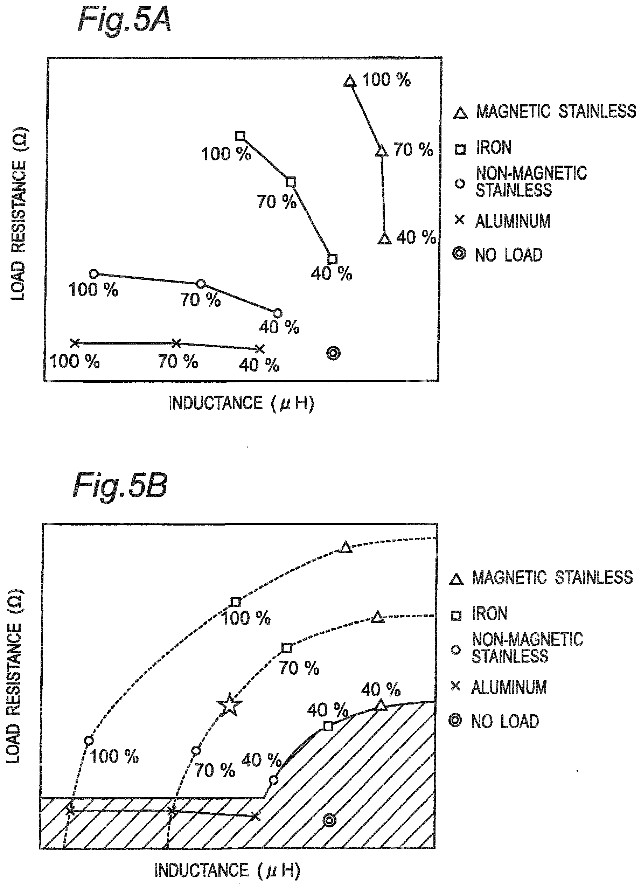

In the foregoing, the controller 50 is adapted to detect the resonance frequency **Fr** and the load resistance **R.** Alternatively, the controller 50 may be designed to calculate the inductance **L** of the heating coil 22 and the load resistance **R,** so as to control the drive circuitry 14. FIGS. 5A and 5B are maps (charts) showing a relationship between the inductance **L** of the heating coil 22 and the load resistance **R** calculated from the primary components of the drive voltage **V** and the drive current **I,** which are similar to FIGS. 4A and 4B. When no disk is set (i.e., the standing situation with no load), the inductance **L** and the load resistance **R** are obtained at a point marked by a double-circle in FIGS. 5A and 5B.

The controller 50 is operable to control the drive circuitry 14 allowing the high-frequency current to the LCR induction-heater 20 only when the detected parameters of the inductance **L** and the load resistance **R** locate outside of the drive suppression region (as shown by a hatching in FIG. 5B). The threshold of the overlapping rate for determining suppression of the electric power supply is may be set as less than 40 %. Also, the drive suppression region may be defined not to heat the pan **P** made of aluminum.

Alternatively, the controller 50 may be adapted to store a function expression, in advance, which defines the predetermined drive suppression region with the inductance **L** and the load resistance **R.** For example, several points (**L, R**) having the predetermined minimum overlapping rate, e.g., 50 %, for four disks 26 of different material such as magnetic stainless are continuously connected by a set of straight or curved lines, and the controller 50 may define and store drive suppression functions which may be linear, quadric, or higher nth order functions (n denotes natural number greater than two) following the straight or curved lines defining the drive suppression region.

The drive suppression functions may be expressed as $R \le p_i \times L + q_i$, wherein $p_i$ and $q_i$ are coefficients for i = 1, 2, 3, ⋯. Thus, the controller 50 is adapted to control the drive circuitry 14 allowing the high-frequency current to the LCR induction-heater 20 only when the calculated parameters of the inductance **L** and the load resistance **R** locate outside of the drive suppression region defined by the drive suppression functions.

Also while continuously connecting points showing the overlapping rates of 100 %, 70 % and 40 % as shown in FIG. 5B, the overlapping rate of the disk 26 made of any material can be estimated based upon the inductance **L** and the load resistance **R**. For example, when the inductance **L** and the load resistance **R** as plotted by a star sign in FIG. 5B, the controller 50 of the present invention determines that the pan **P** stand over the heating coil 55 at the overlapping rate of 70 % since the plotted point locates on the dashed line continuously connecting the overlapping rate of 70 %.

In general, it is well known that the pan **P** can be heated in the most efficient manner when the drive frequency is equal to the resonance frequency unique to the pan **P**. The controller 50 of the present invention finds the resonance frequency **Fr,** so as to choose the drive frequency same as the resonance frequency **Fr.** Also, the drive frequency less than the resonance frequency **Fr** gives adverse effect on the switching elements such as IGBTs, therefore, if the resonance frequency **Fr** was not exactly identified in the conventional art, the drive frequency has often been chosen much higher than the actual resonance frequency.

For example, the pan **P** of aluminum has the resonance frequency **Fr** substantially higher than that of magnetic stainless steel, and the induction-heating cooking system 1 may be designed to heat the pan **P** both of aluminum and magnetic stainless steel. In this case, the pan **P** of magnetic stainless steel should be heated at the drive frequency higher even than the resonance frequency **Fr** of the pan **P** of aluminum, which would limit the eddy current generated in the pan **P** of magnetic stainless steel, and therefore the pan **P** of magnetic stainless steel could not be supplied with power as much as that otherwise could be supplied at the resonance frequency **Fr** of the pan P of magnetic stainless steel.

This would substantially reduce performance of the induction-heating cooking system 1 to provide the heating coil with sufficient power. However according to the load detection of the present invention, the resonance frequency **Fr** of the pan **P** can instantly be detected as discussed above, therefore, the drive frequency for optimizing the desired heating power can quickly be determined so that heating performance of the induction-heating cooking system 1 can be maximized.

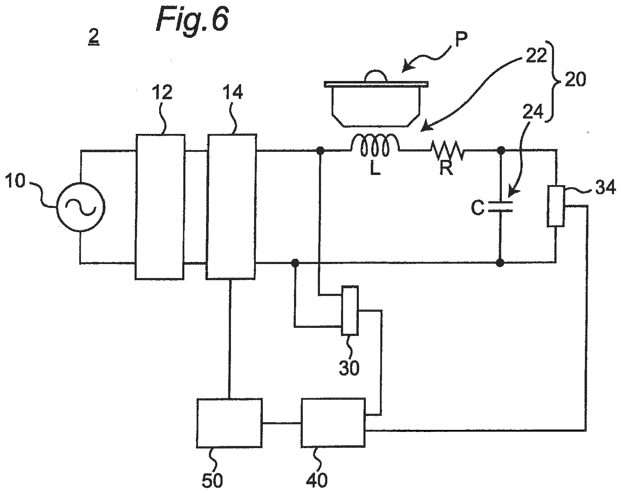

While a current transformer is used for the drive current detector 32 in the foregoing discussion, alternatively, a capacitor voltage detector 34 may be used for determining the drive current through the LCR induction-heater 20 by detecting capacitance voltage across the resonance capacitance 24. FIG. 6 is an alternative schematic circuit block diagram similar to FIG. 1.

As illustrated in FIG. 6, the induction-heating cooking system 1 includes the capacitor voltage detector 34 electrically connected with the primary-component extractor 40, for measuring a capacitance voltage $V_C$ across the resonance capacitance 24. Similar to the drive voltage **V,** the capacitance voltage $V_C$ contains higher order components of integral multiple of the drive frequency. Thus, the primary-component extractor 40 is operable to extract the primary component (or first order component having the frequency same as the drive frequency) of the capacitance voltage $V_C$, by performing the discrete Fourier transformation with the sampled data of the capacitance voltage $V_C$, which also can be expressed by a complex notation. There is a relationship between the primary component of the capacitance voltage $V_C$, and the drive current **I,** as follows:

$$V_{C1} = I_1 / j\omega C$$
$$I_1 = j\omega C V_{C1} \qquad \ldots (8),$$

wherein $\omega$ is frequency **f** of the primary components (same as the drive frequency by definition, $\omega = 2\pi f$), and **C** is capacitance of the resonance capacitor 24, which are known. As apparently seen from Formula (8), the drive current $I_1$ has a phase advancing ahead that of the capacitance voltage $V_C$ by $\pi/2$, i.e., 90°. Thus, as the capacitance voltage $V_{C1}$ is expressed by a complex notation, the primary component of the drive current $I_1$ can be calculated quite easily, as follows:

$$V_{C1} = a + j \times b$$
$$I_1 = (-b + j \times a) \times \omega C \qquad \ldots (9).$$

Based upon the drive current $I_1$, the resonance frequency **Fr** (or the inductance **L** of the heating coil 22) and the load resistance **R** are calculated as discussed above so as to determine the pan material and the standing situation (including whether or not the pan **P** is set over the heating coil 22). Also, since the relatively expensive current transformer can be replaced with the capacitor voltage detector 34 for detecting the drive current at more reasonable cost so that the manufacturing cost of the induction-heating cooking systems can be reduced.

In the foregoing discussion, the primary-component extractor 40 is used to extract the primary components of the drive voltage **V** detected by the drive voltage detector 30 and the drive current **I** detected by the drive current detector 32, an n-th order component extractor may be used to extract n-th components of the drive voltage **V** and the drive current **I** for calculating the resonance frequency **Fr** and the load resistance **R.**

In general, when induction-heating the heated-subject **P** of aluminum, it is required to supply to the heating coil, the high-frequency modulated current having frequency higher than as is required to induction-heating the heated-subject **P** of iron. So-called an "all-metal" induction-heating cooking system that is adapted to heat pans of any metal having such high electronic conductivity and magnetic permeability like aluminum has been proposed (by, for example, Japanese Patent No. JP 3 460 997 B), and is now commercially available. The present invention can be incorporated into the "all-metal" induction-heating cooking system as well.

When heating the pan **P** of aluminum with the drive current **I** of frequency equal to n times of the drive frequency, it is often controlled such that the primary component of the drive current is reduced and the n-th order component of the drive current is increased.

In case where the n-th order components (e.g. third components) of the drive current **I** and drive voltage **V** are greater than the primary component thereof, the n-th order component extractor may select the n-th order components for instant calculation of the resonance frequency **Fr** and the load resistance **R** in a similar manner as discussed above. In this example, this calculation with the n-th order components advantageously eliminates necessity to increase resolution of the A/D converter.

Although not illustrated in detail, a map (chart) can be obtained showing a relationship between the resonance frequency **Fr** and the load resistance **R** calculated from the n-th components of the drive voltage **V** and the drive current **I,** which is similar to FIG. 4A. Yet, the load resistance of the aluminum disk is greater than that of FIG. 4A as the resonance frequency thereof is higher. Thus, the controller 50 is operable to calculate the resonance frequency **Fr** (or inductance **L**) and the load resistance **R** from the n-th order components of the drive voltage **V** and the drive current **I.**

Meanwhile, since the voltage applied across the LCR induction-heater 20 gives direct impact on the drive voltage **V** and the drive current **I** as shown in FIG. 2, it is preferable to shape the waveform thereof as being completely flat. Although voltage from the commercial power supply 10 is rectified by the rectifying circuitry 12 as shown in FIG. 1, a smoothing capacitor with quite large capacitance is required for thoroughly rectifying into direct current without any pulsations.

On the other hand, as the smoothing capacitor with such large capacitance reduces the power efficiency, it is not practical to use it. Rather in reality, especially when the power supplied to the heating coil 20 is substantial, even after the voltage across the LCR induction-heater 20 is rectified by the rectifying circuitry 12, it has a waveform similar to a series of half waves.

Thus, while it is advantageous to efficiently utilize the dynamic range of the voltage output from the primary-component extractor 40 (A/D converter), since waveform variation of the rectified voltage is relatively smaller close to the voltage peak, the controller 50 is preferably adapted to perform the load detection close to the peak of the voltage waveform.

For example, when a waveform of the rectified voltage that is similar to a series of half waves has an AC cycle (power supply cycle) of about 16.6 milliseconds at AC frequency of 60 Hz and an coil driving cycle of about 40 microseconds at driving frequency of 25 kHz, the controller 50 is preferably adapted to perform the load detection in one of the AC cycles close to the waveform peak and during a coil driving cycle of 40 microseconds.

As discussed above, the process of the load detection according to the present invention is used to instantly determine the standing situation (standing area) and composing material of the heated-subject **P,** as well as the optimal drive frequency of the high-frequency current supplied when heating the heated-subject **P.**

Embodiment 1.

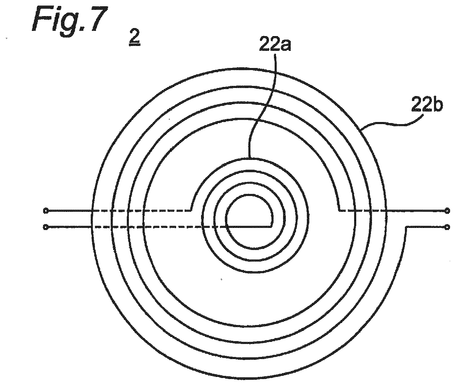

Now upon consideration of the load detection process as described above, Embodiment 1 of the induction-heating cooking system 1 will be described herein in detail with reference to FIGS. 7-10. FIG. 7 is a top plan view of the heating coil 22 of Embodiment 1, which includes a central coil 22a formed by winding a conducting wire on a plane and a peripheral coil 22b formed by winding another conducting wire concentrically around the 22a. The central coil 22a and the peripheral coil 22b are located close to and adapted for heating a single pan **P** in cooperation with each other. Without limiting two of the sub-coils (the central coil 22a and the peripheral coil 22b), the heating coil 22 of the present invention may include three or more sub-coils as far as heating a single pan **P** in cooperation with one another.

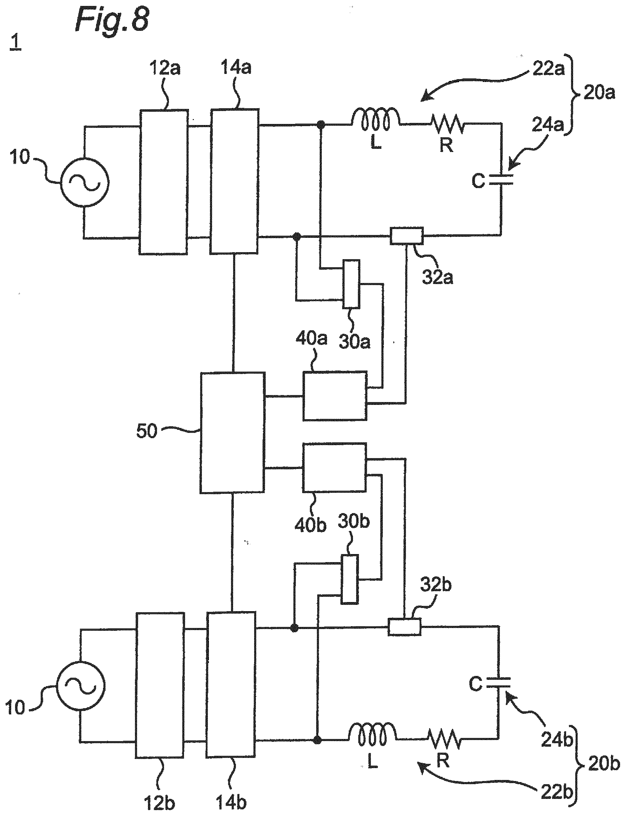

FIG. 8 is a schematic circuit block diagram of the induction-heating cooking system 1, which generally includes two of rectifying circuitries 12a, 12b adapted to rectify two-phase or three-phase alternate current of the commercial power source 10 to direct current, drive circuitries 14a, 14b adapted to supply high-frequency current of a given drive frequency to the heating coils 22a, 22b, LCR induction-heaters 20a, 20b composed of heating coils 22a, 22b and resonance capacitors 24a, 24b connected in series each other. Also the induction-heating cooking system 1 includes drive voltage detectors 30a, 30b adapted to detect drive voltage across the LCR induction-heater 20a, 20b, and drive current detectors 32a, 32b adapted to detect drive current through the LCR induction-heater 20a, 20b.

Furthermore it includes primary-component extractors 40a, 40b connected both with the drive voltage detectors 30a, 30b and the drive current detectors 32a, 32b, and a controller 50 connected both with the drive circuitries 14a, 14b and primary-component extractors 40a, 40b. Since each of the components shown in FIG. 8 has a structure and feature same as described above with FIG. 1, no duplicated description for the common components will be eliminated.

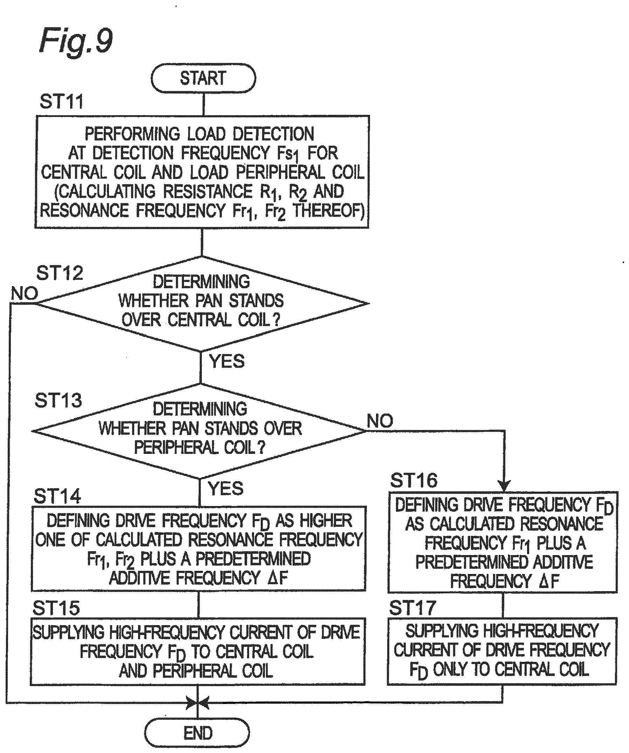

Next, referring to FIG. 9, a controlling process of the controller 50 of Embodiment 1 will be described herein in detail. FIG. 9 is a flow chart illustrating the controlling process of Embodiment 1. An example will be discussed where the controller 50 controls the drive circuitries 14a, 14b to supply high-frequency current of a given drive frequency to the heating coils 22a, 22b, after a user operates a start switch (not shown) on, to start cooking.

In step ST11 (load detection period), the controller 50 performs the load detection for the central coil 22a and the peripheral coil 22b. Thus, the controller 50 firstly controls the drive circuitries 14a, 14b to supply high-frequency current of a given detection frequency $F_{S1}$ to the heating coils 22a, 22b. Then the controller 50 controls the drive voltage detectors 30a, 30b and the drive current detectors 32a, 32b to detect the drive voltage **V** and the drive current **I,** and the primary-component extractors 40a, 40b to extract the primary components of the detected drive voltage **V** and the detected drive current I so as to calculate the load resistance $R_1$, $R_2$ and the resonance frequency $Fr_1$, $Fr_2$ of the heating coils 22a, 22b, respectively.

As stated above, since the drive frequency less than the resonance frequency **Fr** of the pan **P** gives adverse effect on the switching elements such as IGBTs of the drive circuitries 14a, 14b, the detection frequency $F_{S1}$ in the load detection period at beginning of cooking is preferably selected as the same as or higher enough than the maximum resonance frequency **Fr** among the pans **P** which may possibly be used for induction heating. Thus, the aluminum pan **P** has the highest resonance frequency **Fr** among the pans **P** used for cooking, and the resonance frequency **Fr** of the aluminum pan **P** is 30 kHz where the pan **P** covers a whole of the heating coils (overlapping rate of 100 % in the map of FIG. 4A), then the detection frequency $F_{S1}$ is preferably selected as, for example, 35 kHz ($F_{S1}$ = 35 kHz).

When assuming material having even a higher resonance frequency **Fr,** it is more preferable to select the detection frequency $F_{S1}$ in the load detection period much higher than the above. It should be noted that as the detection frequency $F_{S1}$ is set higher, the A/D converters used for the primary-component extractors 40a, 40b also should have higher sampling frequency. Yet, since the A/D converters which operate at higher sampling frequency (e.g., super high speed type A/D converters) cost more expensive, and thus, in order to minimizing the manufacturing cost, the detection frequency $F_{S1}$ is preferably selected as low as possible.

Besides material of the pan **P,** the resonance frequency **Fr** varies depending on a design specification such as the size, shape, arrangement of the heating coils 22a, 22b and capacitance of the resonance capacitor 24, therefore the resonance frequency **Fr** is preferably selected for each product of the induction-heating cooking system 1.

Also it should be noted that especially when the load detection is conducted simultaneously both for the central coil 22a and the peripheral coil 22b, if the high-frequency current supplied to the heating coils have frequency different from each other, an audible beating noise corresponding to frequency difference may be generated, which makes a user quite uncomfortable. Therefore, with simultaneous load detection both for the central coil 22a and the peripheral coil 22b, the detection frequency $F_{S1}$ of the high-frequency current should be the same, while with non-simultaneous load detection, the detection frequency $F_{S1}$ may be different from each other.

In step ST12, the controller 50 compares the calculated resonance frequency $Fr_1$ and the calculated load resistance $R_1$ with the map shown in Fig.4B and prestored in the memory (not shown), thereby to determine whether the pan **P** stands over the central coil 22a, i.e., whether the calculated point ($Fr_1$, $R_1$) are located within or outside of the drive suppression region in the map. When the controller 50 determines that the pan **P** stands over the central coil 22a (in case of "Yes"), similarly in step ST13, the controller 50 compares the calculated resonance frequency $Fr_2$ and the calculated load resistance $R_2$ with the map shown in Fig.4B and prestored in the memory (not shown), thereby to determine whether the pan **P** stands over the peripheral coil 22b.

When the controller 50 determines that the pan **P** does not stand over the central coil 22a (in case of "No" in step ST12), it may control each of the drive circuitries 14a, 14b to halt supplying high-frequency current to the heat coil 22, with assumption that a small metal object such as a spoon but the pan **P** is set on.

When the controller 50 determines that the pan **P** stands both over the central coil 22a and the peripheral coil 22b, in step ST14, the controller 50 sets or defines the drive frequency $F_D$ as the higher one of the calculated resonance frequency $Fr_1$, $Fr_2$ of the heating coils 22a, 22b plus a predetermined additive frequency $\Delta F$.

$$F_D = Fr_1 + \Delta F \qquad wherein \qquad Fr_1 > Fr_2$$
$$F_D = Fr_2 + \Delta F \qquad wherein \qquad Fr_1 < Fr_2 \qquad \ldots(10).$$

The additive frequency $\Delta F$ may be a predetermined fixed value (a constant frequency) such as 3 kHz or a weighed value in accordance with the material of the pan **P** detected in the load detection. The additive frequency $\Delta$**F** may be selected as 2 kHz, 2.5 kHz, and 3 kHz, in accordance with the resonance frequency **Fr** and the load resistance **R** calculated in the load detection which are close to ones of the pan **P** of magnetic stainless steel, non-magnetic stainless steel, and iron, respectively. Thus, the additive frequency $\Delta$**F** may be weighed upon the material composing the pan **P.**

Also the additive frequency $\Delta$**F** may be weighed depending upon the calculated resonance frequency **Fr,** and for example the additive frequency $\Delta$**F** may be selected as 2 kHz or 3 kHz in accordance with the calculated resonance frequency **Fr** which is lower or higher than 23 kHz. Thus, the additive frequency $\Delta$**F** may be weighed depending upon the calculated resonance frequency **Fr** of the pan **P.**

In step ST15 (driving period), the controller 50 controls the drive circuitries 14a, 14b to supply high-frequency current of the drive frequency $F_D$ as defined above, to the central coil 22a and the peripheral coil 22b. When the drive circuitries 14a, 14b are designed to operate at discrete frequency (e.g., discrete frequency with an increment of 1 kHz in a range between 20 kHz through 35 kHz), the controller 50 controls the drive circuitries 14a, 14b may select one of the discrete drive frequency as one closest to and higher than the defined drive frequency $F_D$.

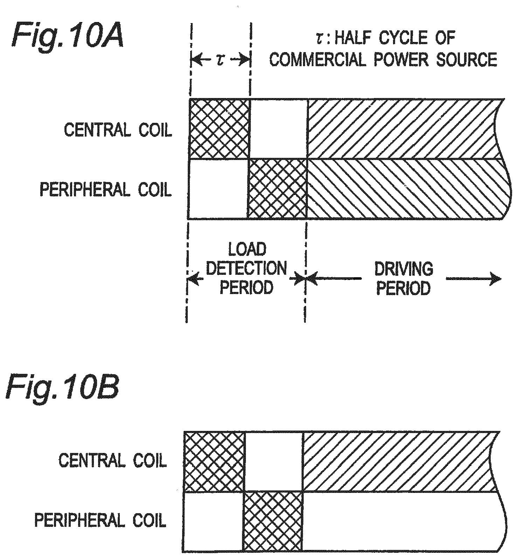

FIGS. 10A and 10B are timing charts schematically illustrating the load detection (or the pan detection) period and the driving period of the aforementioned controlling process. In FIGS. 10A and 10B, the lateral length ($\tau$) of a square corresponds to a half cycle of the commercial power source. In the load detection period, the high-frequency current of the detection frequency $F_{S1}$ is supplied during time windows shown by a cross-hatching, and in the driving period, the high-frequency current of the defined drive frequency $F_D$ is supplied for actual cooking during time durations shown by a single-hatching. The blank time windows in the chart indicate no high-frequency current supplied.

As discussed above, even after the voltage from the commercial power source 10 is rectified, the waveform of the rectified voltage cannot be completely flat, rather it is similar to a series of half waves. Since the waveform variation of the rectified voltage is relatively smaller as the waveform is closer to the voltage peak, the controller 50 is preferably performs the load detection at a particular phase closer to the peak of the voltage waveform.

Although the controller 50 can perform the load detection by extracting the primary components of the detected drive voltage **V** and the detected drive current **I** only within a single cycle of the detection frequency $F_{S1}$ (about 40 microseconds at 25 kHz), the controller 50 may repeatedly perform the load detection throughout the half cycle of the commercial power source 10 (about 8.3 milliseconds at 60 Hz), especially where the rectified voltage needs some time to be stable.

As shown in the flowchart of FIG. 9 and the timing chart of FIG. 10A, the controller 50 preferably performs the load detection for the central coil 22a and the peripheral coil 22b in sequence, in order to avoid adverse effect due to the mutual induction of those coils. Alternatively the controller 50 may perform the load detection simultaneously both for the coils when no mutual induction gives adverse impact on the load detection. Such simultaneous load detection for multiple coils requires a sample-holding circuitry by means of multiple A/D converters, or a single high-speed A/D converter capable of high speed switching which costs more though.

Also in the load detection, while the primary components of the detected drive voltage **V** and the detected drive current **I** within at least one cycle of the detection frequency $F_{S1}$ are required, since the detection frequency $F_{S1}$ is substantially higher than the frequency of the commercial power source 10, a multiplexer is used to switch multiple coils alternately each on the coil driving cycles.

When performing the load detection for the coils in sequence, if the driving voltage needs little time to be stable, the drive voltage **V** and the drive current **I** may be sampled at a timing close to the peak of the rectified voltage, however, if the driving voltage needs some time for stabilization after switching to each of the coils, the drive voltage **V** and the drive current **I** may be sampled after switching to drive the coils at each peak of the rectified voltage.

Referring back to the flowchart of FIG. 9, in step ST13, when the controller 50 determines that the pan **P** does not stand over the peripheral coil 22b (in case of "No"), in step ST16, the controller 50 similarly sets or defines the drive frequency $F_D$ as the calculated resonance frequency $Fr_1$ of the heating coil 22a plus the predetermined additive frequency $\Delta$**F**. Then the controller 50 controls the drive circuitry 14a to supply the high-frequency current only to the central coil 22a. FIG. 10B is another timing chart where no pan **P** stands over the peripheral coil 22b so that only the heating coil 22a is supplied with power.

As discussed above, the controller 50 according to the present invention controls the driving circuitries 14a, 14b to supply to each of the heating coils 22, high-frequency current having the drive frequency $F_D$ higher than the resonance frequency **Fr** by the additive frequency $\Delta$**F**, which is optimal for achieving the desired heating power with quite high heating efficiency and eliminating the risk of the adverse impact on the switching elements, thereby realizing a safe and reliable control process of the driving circuitries 14a, 14b.

Embodiment 2.

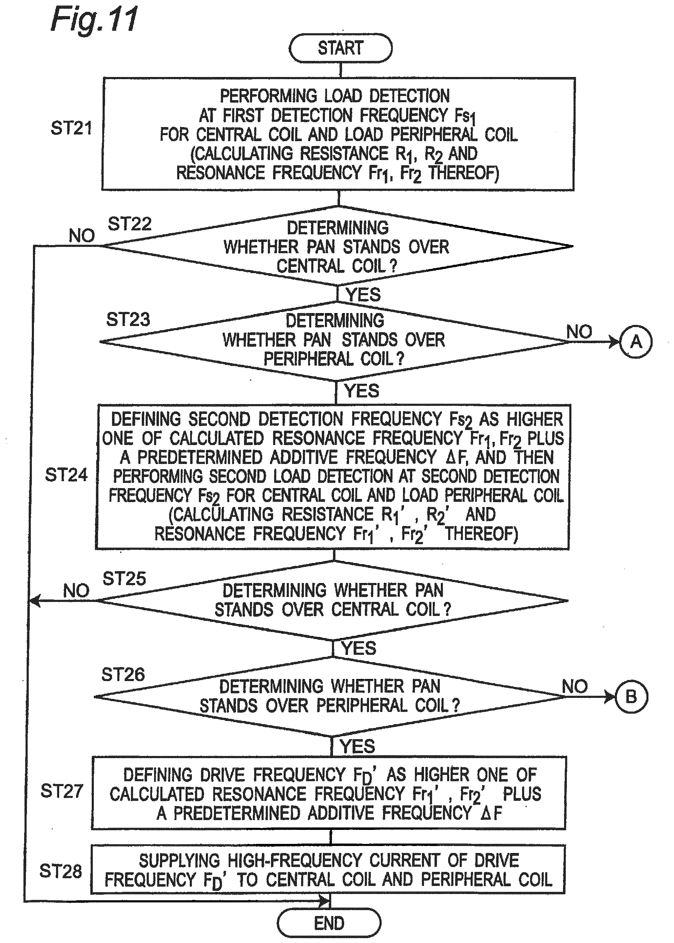

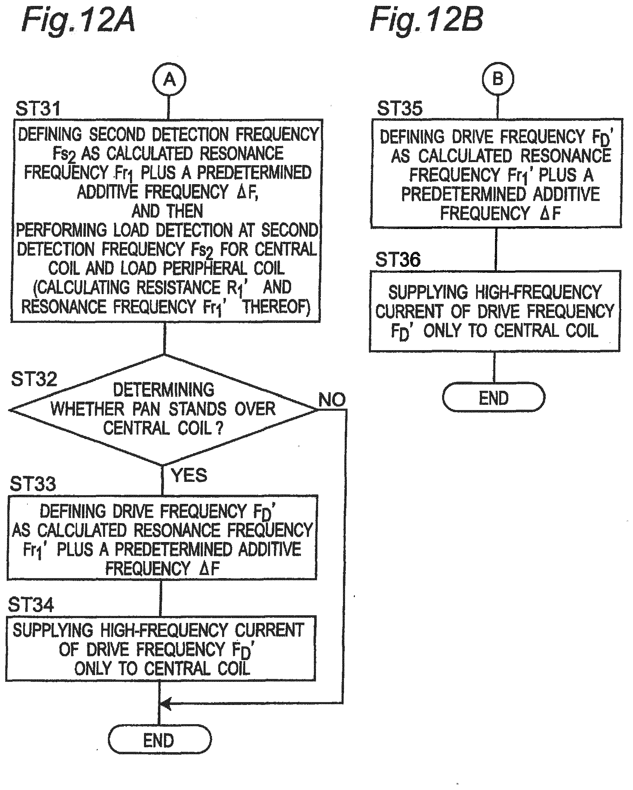

Referring to FIGS. 11 and 12, Embodiment 2 of the induction-heating cooking system according to the present invention will be described herein. The controller 50 of Embodiment 2 is similar to that of Embodiments 1 except that after the first load detection with the high-frequency current of the detection frequency $F_{S1}$ to be supplied to each of heating coils 22 for defining the drive frequency $F_D$ as the higher one of the calculated resonance frequency $Fr$, the controller 50 performs the second load detection with the high-frequency current of the detection frequency $F_{S2}$ that is the same as the defined drive frequency $F_D$ for defining a precise resonance frequency $Fr$. Therefore, the duplicated description in detail for the common features will be eliminated.

According to Embodiment 1, the detection frequency $F_{S1}$ of the high-frequency current supplied to the heating coils 22 is selected as the same as or the maximum resonance frequency $Fr$ among the pans $P$ which may possibly be used for induction heating, for example, 35 kHz. Yet, the resonance frequency $Fr$ calculated by the load detection may be substantially lower than the detection frequency $F_{S1}$, in other words, the actual resonance frequency $Fr$ of each of the heating coils 22 may be substantially lower than the detection frequency $F_{S1}$. In this case, since the phase between the drive current $I$ and the drive voltage $V$ extracted by the primary-component extractor 40 is close to -90°, an arithmetic error in the calculated resonance frequency $Fr$ may increase and deteriorate the load detection accuracy.

Therefore according to the induction-heating cooking system 1, the controller 50 performs the first load detection with the high-frequency current of the first detection frequency $F_{S1}$ so as to calculate the resonance frequency $Fr$ for each of the heating coils 22, and select one of the highest resonance frequency $Fr$ to define the second detection frequency $F_{S2}$ of the high-frequency current for the second load detection, thereby enhancing the load detection accuracy.

FIGS. 11 and 12 are flow charts illustrating the controlling process of Embodiment 2. When a user starts cooking, in the first load detection period (step ST21), the controller 50 performs the first load detection for the central coil 22a and the peripheral coil 22b at the detection frequency $F_{S1}$. Thus the controller 50 controls the driving circuitries 14a, 14b to supply high-frequency current having the first detection frequency $F_{S1}$ (e.g., 35 kHz) to each of the central coil 22a and the peripheral coil 22b and determines the load resistance $R_1$, $R_2$ and the resonance frequency $Fr_1$, $Fr_2$ of the central coil 22a and the peripheral coil 22b.

In steps ST22, ST23, the controller 50 determines whether the pan $P$ stands over the central coil 22a and the peripheral coil 22b by referring the map shown in Fig.4B in accordance with the calculated load resistance $R_1$, $R_2$ and the resonance frequency $Fr_1$, $Fr_2$ of the heating coils 22a, 22b. Upon determining that the pan $P$ stands over the central coil 22a and the peripheral coil 22b (in case of "Yes" in both steps ST22, ST23), the controller 50 proceeds to step ST24.

Upon determining that the pan $P$ is not set over the central coil 22a (in case of "No" in step ST22), the controller 50 controls both of the drive circuitries 14a, 14b to stop supplying the high-frequency current to the central coil 22a and the peripheral coil 22b. Upon determining that the pan $P$ stands only over the central coil 22a (in case of "No" in step ST23), the controller 50 proceeds to step "A" shown in another flowchart of FIG. 12A.

As discussed above, since the detection frequency $F_{S1}$ for the first load detection is selected as the same as or the maximum resonance frequency $Fr$ among the pans $P$ which may possibly be used for induction heating, actually calculated resonance frequency $Fr$ would be lower than the detection frequency $F_{S1}$.

In the second load detection period (step ST24), the controller 50 defines the second detection frequency $F_{S2}$ as the higher one of the calculated resonance frequency $Fr_1$, $Fr_2$ of the central coil 22a and the peripheral coil 22b plus a predetermined additive frequency $\Delta F$. Further in steps ST25, ST26, the controller 50 performs the second load detection at the detection frequency $F_{S2}$ for the central coil 22a and the peripheral coil 22b to calculate the load resistance $R_1{}'$, $R_2{}'$ and the resonance frequency $Fr_1{}'$, $Fr_2{}'$ of the central coil 22a and the peripheral coil 22b.

In steps ST25, ST26, the controller 50 determines whether the pan $P$ stands over the central coil 22a and the peripheral coil 22b by referring the map shown in Fig.4B in accordance with the load resistance $R_1$, $R_2$ and the resonance frequency $Fr_1$, $Fr_2$ of the heating coils 22a, 22b which are newly calculated in step ST24.

Upon determining that the pan $P$ stands over the central coil 22a and the peripheral coil 22b (in case of "Yes" in both steps ST25, ST26), the controller 50 proceeds to step ST27. Upon determining that the pan $P$ is not set over the central coil 22a (in case of "No" in step ST25), the controller 50 controls both of the drive circuitries 14a, 14b to stop supplying the high-frequency current to the central coil 22a and the peripheral coil 22b. Upon determining that the pan $P$ stands only over the central coil 22a (in case of "No" in step ST26), the controller 50 proceeds to step "B" shown in another flowchart shown in FIG. 12B.

Since the second detection frequency $F_{S2}$ is lower than the first detection frequency $F_{S1}$ and closer to the actual resonance frequency $Fr_1$, $Fr_2$ of the central coil 22a and the peripheral coil 22b, the arithmetic errors in the resonance frequency $Fr_1{}'$, $Fr_2{}'$ of the central coil 22a and the peripheral coil 22b calculated in the second load detection can be reduced so as to enhance the load detection accuracy.

In step ST27, similar to Embodiment 1, the controller 50 defines the second drive frequency $F_D{}'$ as the higher one of the calculated resonance frequency $Fr_1{}'$, $Fr_2{}'$ of the central coil 22a and the peripheral coil 22b plus a predetermined additive frequency $\Delta F$. Further in the driving period (step ST28), the controller 50 controls the drive circuitries 14a, 14b to supply high-frequency current having the second drive frequency $F_D{}'$ both to the central coil 22a and the peripheral coil 22b.

Meanwhile the controller 50 proceeds to step "A" shown in another flowchart of FIG. 12A when determined that the pan $P$ stands over the central coil 22a but not over the peripheral coil 22b.

In the second load detection period (step ST31), the controller 50 defines the second detection frequency $F_{S2}$ as the calculated resonance frequency $Fr_1$ of the central coil 22a plus a predetermined additive frequency $\Delta F$. Further in step ST31, the controller 50 performs the second load detection at the detection frequency $F_{S2}$ for the central coil 22a so as to calculate the load resistance $R_1$' and the resonance frequency $Fr_1$' of the central coil 22a.

In step ST32, the controller 50 determines whether the pan **P** stands over the central coil 22a by referring the map shown in Fig.4B in accordance with the load resistance $R_1$' and the resonance frequency $Fr_1$' of the central coil 22a which are newly calculated in step ST31.

Upon determining that the pan **P** stands over the central coil 22a (in case of "Yes" in step ST32), the controller 50 proceeds to step ST33. Upon determining that the pan **P** is not set over the central coil 22a (in case of "No" in step ST32), the controller 50 controls the drive circuitry 14a to stop supplying the high-frequency current to the central coil 22a.

In step ST33, the controller 50 defines the second drive frequency $F_D$' as the calculated resonance frequency $Fr_1$' of the central coil 22a plus a predetermined additive frequency $\Delta F$. Further in the driving period (step ST34), the controller 50 controls only the drive circuitry 14a to supply high-frequency current having the second drive frequency $F_D$' to the central coil 22a.

When determined that the pan **P** stands over the central coil 22a but not over the peripheral coil 22b in steps ST25, ST26, in the second load detection period (step ST35) of FIG. 12B, the controller 50 defines the second drive frequency $F_D$' as the calculated resonance frequency $Fr_1$' of the central coil 22a plus a predetermined additive frequency $\Delta F$. Further in the driving period (step ST36), the controller 50 controls only the drive circuitry 14a to supply high-frequency current having the second drive frequency $F_D$' to the central coil 22a.

As explained above, since the second detection frequency $F_{S2}$ used in the second load detection is lower than the first detection frequency $F_{S1}$ and closer to the actual resonance frequency of the heating coil, the arithmetic errors in the resonance frequency **Fr'** of the heating coil calculated in the second load detection can be reduced so as to enhance the load detection accuracy and allow heating the pan **P** at even more effective drive frequency $F_D$.

Embodiment 3.

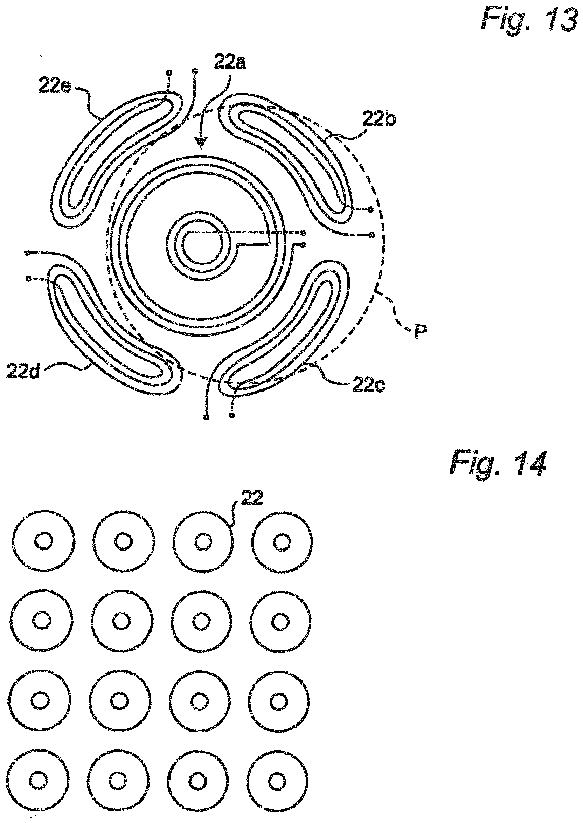

Referring to FIGS. 13-16, Embodiment 3 of the induction-heating cooking system according to the present invention will be described herein. The induction-heating cooking system 1 of Embodiment 3 is similar to Embodiments 1 except that it includes three or more sub heating coils. Therefore, the duplicated description in detail for the common features will be eliminated.

The induction-heating cooking system 1 includes a central coil 22a and four of peripheral coils 22b-22e formed in a shape of a quarter circle arc (like a banana or cucumber). Although not shown in detail, each of the sub heating coils, i.e., the central coil 22a and the peripheral coils 22b-22e, includes a LCR induction-heater 20, a drive voltage detector 30, and a drive current detector 32, a primary-component extractor 40, and a single controller 50 for controlling those components. Alternatively induction-heating cooking system 1 may include a plurality of circular sub heating coils 22 arranged in a matrix, thus the present invention is not limited to the shape and arrangement disclosed and illustrated herein.

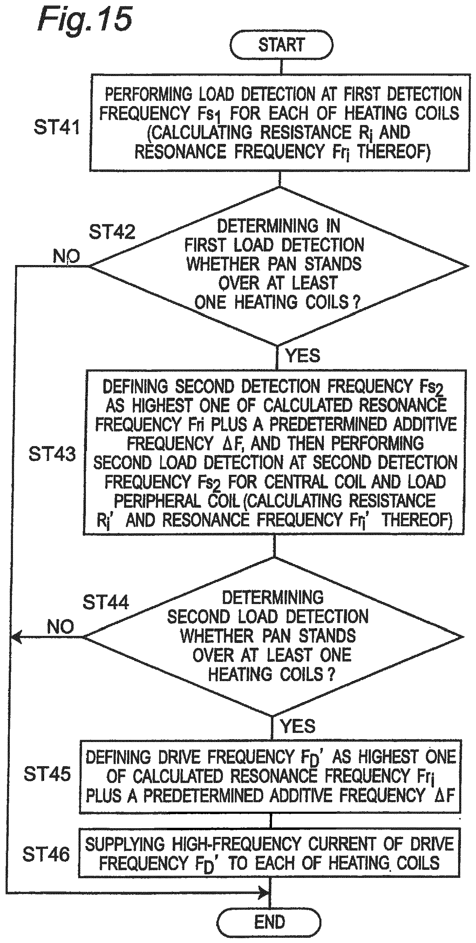

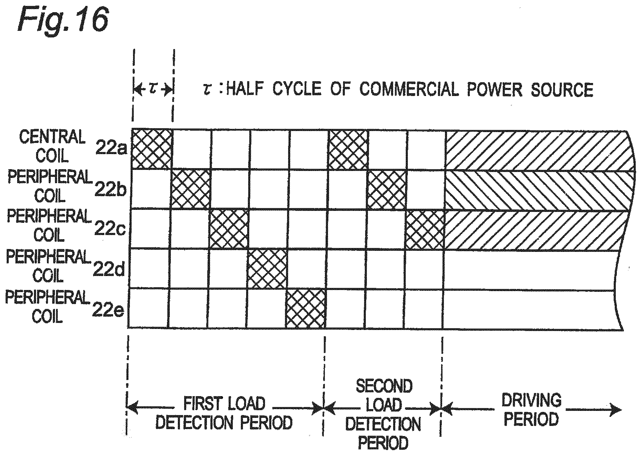

FIG. 15 is a flowchart illustrating a controlling process of Embodiment 3, and FIG. 16 is a timing chart schematically illustrating the load detection period and the driving period. When a user starts cooking, in the first load detection period (in step ST41), the controller 50 supplies to each of the sub heating coils 22, high-frequency current of the preset (or default) first detection frequency $F_{S1}$ to perform the first load detection, so as to calculate the load resistance $R_i$ and the resonance frequency $Fr_i$ of the sub heating coils 22 (i = 1, 2, 3, ...).

Next in step ST42, the controller 50 determines whether the pan **P** stands over at least one of the sub heating coils 22 in accordance with the calculated load resistance $R_i$ and the resonance frequency $Fr_i$ of the sub heating coils 22. When determined that the pan **P** stands over none of the sub heating coils 22 (in case of "No" in step ST42), then the controller 50 controls each of the drive circuitries 14 to stop supplying the high-frequency current to the sub heating coils 22.

When determined that the pan **P** stands over at least one of the sub heating coils 22 (in case of "Yes" in step ST42), the controller 50 selects one of the highest resonance frequency **Fr** to define the second detection frequency $F_{S2}$ of the high-frequency current for the second load detection as the highest resonance frequency **Fr** plus a predetermined additive frequency $\Delta F$, and performs the second load detection supplies to each of the sub heating coils 22, high-frequency current of the second detection frequency $F_{S2}$ to perform the second load detection, so as to calculate the load resistance $R_i$' and the resonance frequency $Fr_i$' of the sub heating coils 22 (i = 1, 2, 3, ...).

In step ST45, similar to Embodiment 1, the controller 50 defines the second drive frequency $F_D$' as the highest one of the calculated resonance frequency $Fr_i$' of the sub heating coils 22 plus a predetermined additive frequency $\Delta F$. In the driving period (in step ST46), the controller 50 controls the each of the drive circuitries 14 to supply the high-frequency current to each of the sub heating coils 22. Therefore the induction-heating cooking system of Embodiment 3 can instantly detect the optimal drive frequency $F_D$' so as to supply the high-frequency current of the optimal drive

frequency $\mathbf{F_D}$' to the sub heating coils 22 for heating the pan **P** in an efficient manner.

Suppose if the pan **P** is set on the top plate off the center of the central heating coil 22a as shown in a dashed line of FIG. 13, the controller 50 determines that the pan **P** stands over the central coil 22a and the peripheral coils 22b, 22c, and performs the second load detection (step ST41) to define the optimal drive frequency $\mathbf{F_D}$' so as to control the each of the drive circuitries 14 to supply the high-frequency current to the sub heating coils 22. Thus the induction-heating cooking system 1 according to Embodiment 3 can instantly detect the optimal drive frequency $\mathbf{F_D}$' to heat the pan **P** at the optimal drive frequency $\mathbf{F_D}$'.

As explained above, since the second detection frequency $\mathbf{F_{S2}}$ used in the second load detection is lower than the first detection frequency $\mathbf{F_{S1}}$ and closer to the actual resonance frequency **Fr** of the heating coil, the arithmetic errors in the resonance frequency **Fr'** of the heating coil calculated in the second load detection can be reduced so as to enhance the load detection accuracy and allow heating the pan **P** at even more effective drive frequency $\mathbf{F_D}$'.

If desired, the third or subsequent load detection may be repeatedly performed to supply the high-frequency current to the sub heating coils 22 at the drive frequency $\mathbf{F_D}$' which is further closer to the actual resonance frequency **Fr** of the pan **P,** thereby to enhance the heating efficiency. Also assuming that the optimal drive frequency $\mathbf{F_D}$ may be varied, for example, when a user tosses the ingredients in the pan **P,** the load detection may be performed on a regular basis at every constant time passed after cooking.

Denotation of Reference Numerals

| | |
|---|---|
| 1 | induction-heating cooking system |
| 10 | commercial power source |
| 12 | rectifying circuitry |
| 14 | drive circuitry |
| 20 | LCR induction-heater |
| 22 | heating coil |
| 22a | central coil |
| 22b | peripheral coil |
| 24 | resonance capacitor |
| 30 | drive voltage detector |
| 32 | drive current detector |
| 40 | primary-component extractor |
| 50 | controller |
| P | heated-subject (pan) |

**Claims**

1. An induction-heating cooking system, comprising:

- a plurality (i = 2, 3...) of heating coils (22) closely arranged for heating a single heated-subject (P) in cooperation with one another;
- a plurality of drive circuitries (14), each of the drive circuitries (14) supplying a high-frequency current of the same frequency individually to one of the heating coils (22);
- a plurality of n-th order component extractors (n: natural number), each of the n-th order component extractors extracting an n-th order drive current component of the drive current through each of the heating coils (22) and an n-th order drive voltage component of the drive voltage across each of the heating coils (22); and
- a controller (50) calculating a load resistance ($\mathbf{R_i}$) and a resonance frequency ($\mathbf{Fr_i}$) of each of the heating coils (22) based upon the n-th order drive current component and the n-th order drive voltage component extracted by the corresponding n-th order component extractors;

wherein the controller (50) is operative to:

measure a time duration when each of the heating coils (22) is supplied with the high-frequency current; and at every constant time passed, calculate a load resistance ($\mathbf{R_i}$) and a resonance frequency ($\mathbf{Fr_i}$) of each of the heating coils (22) which are supplied with the high-frequency current, and determine whether or not the heated-subject (P) stands over each of the heating coils (22) in accordance with the calculated the load resistance ($R_i$) and the calculated resonance frequency ($Fr_i$) of each of the heating coils (22).

2. The cooking system according to claim 1,
   wherein the controller (50) is operative to define a drive frequency ($F_D$) of each of the drive circuitries (14) supplying to each of the heating coils (22) in accordance with the calculated load resistance ($R_i$) and the calculated resonance frequency ($Fr_i$) thereof.

3. The cooking system according to claim 1 or 2,
   wherein the controller (50) is operative to again define a drive frequency ($F_D$) of each of the drive circuitries (14) if the calculated load resistance ($R_i$) and the calculated resonance frequency ($Fr_i$) thereof are different from those which were previously calculated.

4. The cooking system according to any one of claims 1 to 3,
   wherein the controller (50) is operative control each of the drive circuitries (14) to stop supplying the high-frequency current to each of the heating coils (22) for which the heated-subject (P) does not stand over each of the heating coils (22) in accordance with the calculated load resistance ($R_i$) and the calculated resonance frequency ($Fr_i$) thereof.

5. The cooking system according to any one of claims 1 to 3,
   wherein the heating coils (22) include a central coil (22a) and a plurality of peripheral coils (22b) arranged around the central coil (22a) and shaped for heating the single heated-subject (P) in cooperation with one another, and wherein the controller (50) is operative control each of the drive circuitries (14) to stop supplying the high-frequency current to all of the heating coils (22) upon determination that the heated-subject (P) does not stand over the central coil (22a) in accordance with the calculated load resistance ($R_i$) and the calculated resonance frequency ($Fr_i$) thereof.

**Patentansprüche**

1. Induktionsheizungs-Kochsystem, das Folgendes aufweist:

   - eine Vielzahl (i = 2, 3, ...) von Heizspulen (22), die eng angeordnet sind, um ein einzelnes zu beheizendes Objekt (P) im Zusammenwirken miteinander zu beheizen;
   - eine Vielzahl von Betriebsschaltungsanordnungen (14), wobei jede der Betriebsschaltungsanordnung (14) einen hochfrequenten Strom mit der gleichen Frequenz individuell einer von den Heizspulen (22) zuführt;
   - eine Vielzahl von Komponentenextrahierern n-ter Ordnung (n: natürliche Zahl), wobei jeder Komponentenextrahierer n-ter Ordnung eine Betriebsstromkomponente n-ter Ordnung extrahiert, und zwar aus dem Betriebsstrom durch die jeweilige von den Heizspulen (22), und eine Betriebsspannungskomponente n-ter Ordnung extrahiert, und zwar aus der Betriebsspannung über der jeweiligen von den Heizspulen (22); und
   - eine Steuerung (50), die einen Lastwiderstand ($R_i$) und eine Resonanzfrequenz ($Fr_i$) von jeder von den Heizspulen (22) berechnet, und zwar basierend auf der Betriebsstromkomponente n-ter Ordnung und der Betriebsspannungskomponente n-ter Ordnung, die von den zugehörigen Komponentenextrahierern n-ter Ordnung extrahiert worden sind;

   wobei die Steuerung (50) dazu ausgebildet ist:

   eine Zeitdauer zu messen, wenn die jeweilige der Heizspulen (22) mit dem hochfrequenten Strom versorgt wird; und
   immer dann, wenn eine konstante Zeit verstrichen ist, einen Lastwiderstand ($R_i$) und eine Resonanzfrequenz ($Fr_i$) von jeder der Heizspulen (22) zu berechnen, die mit dem hochfrequenten Strom versorgt werden, und zu bestimmen, ob oder ob nicht das zu beheizende Objekt (P) über der jeweiligen von den Heizspulen (22) steht, und zwar gemäß dem berechneten Lastwiderstand ($R_i$) und der berechneten Resonanzfrequenz (Fr;) jeder der Heizspulen (22).

2. Induktionsheizungs-Kochsystem gemäß Anspruch 1,
   wobei die Steuerung (50) dazu ausgebildet ist, eine Betriebsfrequenz ($F_D$) von jeder der Betriebsschaltungsanordnung (14) zu definieren, die jede der
   Heizspulen (22) in Abhängigkeit von dem berechneten Lastwiderstand ($R_i$) und der berechneten Resonanzfrequenz ($Fr_i$) hiervon versorgt.

**3.** Kochsystem gemäß einem der Ansprüche 1 oder 2,
wobei die Steuerung (50) dazu ausgebildet ist, erneut eine Betriebsfrequenz ($F_D$) von jeder der Betriebsschaltungsanordnungen (14) zu definieren, wenn sich der berechnete Lastwiderstand ($R_i$) und die berechnete Resonanzfre-quenz ($Fr_i$) hiervon von denen unterscheidet, die zuvor berechnet worden sind.

**4.** Kochsystem gemäß einem der Ansprüche 1 bis 3,
wobei die Steuerung (50) dazu ausgebildet ist, jede von den Betriebsschaltungsanordnungen (14) so zu steuern, dass sie das Zuführen des hochfrequenten Stroms zu der jeweiligen von den Heizspulen (22) stoppt, bei denen das zu beheizende Objekt (P) nicht über der jeweiligen der Heizspulen (22) steht, und zwar in Abhängigkeit von dem berechneten Lastenwiderstand ($R_i$) und der berechneten Resonanzfrequenz ($Fr_i$) hiervon.

**5.** Kochsystem gemäß einem der Ansprüche 1 bis 3,
wobei die Heizspulen (22) eine zentrale Spule (22a) und eine Vielzahl von peripheren Spulen (22b) aufweisen, die um die zentrale Spule (22a) herum angeordnet sind und zum Beheizen des einzelnen zu beheizenden Objekts (P) in Zusammenarbeit miteinander ausgebildet sind, und wobei die Steuerung (50) dazu ausgebildet ist, jede von den Betriebsschaltungsanordnungen (14) so zu steuern, dass sie die Zuführung des hochfrequenten Stroms zu allen Heizspulen (22) stoppt, wenn festgestellt wird, dass das zu beheizende Objekt (P) nicht über der Zentralspule (22a) steht, und zwar in Abhängigkeit von dem berechneten Lastwiderstand ($R_i$) und der berechneten Resonanzfrequenz ($Fr_i$).

## Revendications

**1.** Système de cuisson à chauffage par induction, comprenant :

- une pluralité (i = 2, 3, ...) de bobinages chauffants (22) agencés de manière proche pour chauffer un unique sujet à chauffer (P) en coopération les uns avec les autres ;
- une pluralité de circuits pilotes (14), chacun des circuits pilotes (14) alimentant un courant à haute fréquence de la même fréquence individuellement à l'un des bobinages chauffants (22) ;
- une pluralité d'extracteurs de composants de n-ième ordre, n étant un nombre naturel, chacun des extracteurs de composants de n-ième ordre extrayant un composant de courant pilote de n-ième ordre du courant pilote à travers chacun des bobinages chauffants (22) et un composant de voltage pilote de n-ième ordre du voltage pilote aux bornes de chacun des bobinages chauffants (22) ; et
- un contrôleur (50) qui calcule une résistance de charge (Ri) et une fréquence de résonance (Fri) de chacun des bobinages chauffants (22) sur la base du composant de courant pilote de n-ième ordre et du composant de voltage pilote de n-ième ordre extraits par des extracteurs de composants de n-ième ordre correspondants ;

dans lequel le contrôleur (50) a pour fonction de :

mesurer une durée temporelle quand chacun des bobinages chauffants (22) est alimenté avec le courant à haute fréquence ; et
chaque fois qu'un temps constant s'est écoulé, calculer une résistance de charge (Ri) et une fréquence de résonance (Fri) de chacun des bobinages chauffants (22) qui sont alimentés avec le courant à haute fréquence, et déterminer si le sujet à chauffer (P) se trouve ou non au-dessus de chacun des bobinages chauffants (22) en accord avec la résistance de charge calculée (Ri) et la fréquence de résonance calculée (Fri) de chacun des bobinages chauffants (22).

**2.** Système de cuisson selon la revendication 1,
dans lequel le contrôleur (50) a pour fonction de définir une fréquence pilote ($F_D$) de chacun des circuits pilotes (14) qui alimente chacun des bobinages chauffants (22) en accord avec la résistance de charge calculée (Ri) et la fréquence de résonance calculée (Fri) de celle-ci.

**3.** Système de cuisson selon la revendication 1 ou 2, dans lequel le contrôleur (50) a pour fonction de définir à nouveau une fréquence pilote ($F_D$) de chacun des circuits pilotes (14) si la résistance de charge calculée (Ri) et la fréquence de résonance calculée (Fri) de celle-ci sont différentes de celles qui ont été précédemment calculées.

**4.** Système de cuisson selon l'une quelconque des revendications 1 à 3,
dans lequel le contrôleur (50) a pour fonction de commander chacun des circuits pilotes (14) pour arrêter l'alimentation du courant à haute fréquence à chacun des bobinages chauffants (22) pour lesquels le sujet à chauffer (P) ne se trouve pas au-dessus de chacun des bobinages chauffants (22) en accord avec la résistance de charge calculée (Ri) et la fréquence de résonance calculée (Fri) de celle-ci.

5. Système de cuisson selon l'une quelconque des revendications 1 à 3,
dans lequel les bobinages chauffants (22) inclut un bobinage central (22a) et une pluralité de bobinages périphériques (22b) agencés autour du bobinage central (22a) et conformés pour chauffer l'unique sujet à chauffer (P) en coopération les uns avec les autres, et dans lequel le contrôleur (50) a pour fonction de commander chacun des circuits pilotes (14) pour arrêter d'alimenter le courant à haute fréquence à tous les bobinages chauffants (22) suite à une détermination que le sujet à chauffer (P) ne se trouve pas au-dessus du bobinage central (22a) en accord avec la résistance de charge calculée (Ri) et la fréquence de résonance calculée (Fri) de celle-ci.

# Fig.1

1

# Fig.2

I : DRIVE CURRENT
    WAVEFORM

V : DRIVE VOLTAGE
    WAVEFORM

1 COIL DRIVING CYCLE

*Fig.3A*

OVERLAPPING
RATE OF 100%

22

26

O

*Fig.3B*

OVERLAPPING
RATE OF 75%

22

E

O

26

*Fig.3C*

OVERLAPPING
RATE OF 50%

22

O

E

26

## Fig.4A

## Fig.4B

Fig.5A

Fig.5B

Fig.6

*Fig.7* <u>2</u>

22a

22b

# Fig.8

# Fig.9

```
                    ┌─────────────┐
                    │    START    │
                    └─────────────┘
                           │
ST11                       ▼
┌──────────────────────────────────────────────┐
│          PERFORMING LOAD DETECTION             │
│     AT DETECTION FREQUENCY Fs₁ FOR             │
│  CENTRAL COIL AND LOAD PERIPHERAL COIL         │
│   (CALCULATING RESISTANCE R₁, R₂ AND          │
│  RESONANCE FREQUENCY Fr₁, Fr₂ THEREOF)         │
└──────────────────────────────────────────────┘
                           │
ST12                       ▼
        ╱────────────────────────────────╲
  NO   ╱         DETERMINING               ╲
◄──────    WHETHER PAN STANDS               
       ╲       OVER CENTRAL COIL?          ╱
        ╲────────────────────────────────╱
                       │ YES
ST13                   ▼
        ╱────────────────────────────────╲
       ╱          DETERMINING              ╲     NO
        ╲   WHETHER PAN STANDS OVER       ─────────────┐
         ╲      PERIPHERAL COIL?          ╱            │
          ╲──────────────────────────────╱             │
ST14              │ YES                        ST16     ▼
┌────────────────────────────────────────┐   ┌──────────────────────────┐
│ DEFINING DRIVE FREQUENCY F_D AS HIGHER  │   │ DEFINING DRIVE FREQUENCY F_D│
│ ONE OF CALCULATED RESONANCE FREQUENCY   │   │  AS CALCULATED RESONANCE  │
│   Fr₁, Fr₂ PLUS A PREDETERMINED         │   │   FREQUENCY Fr₁ PLUS A    │
│        ADDITIVE FREQUENCY ΔF            │   │  PREDETERMINED ADDITIVE   │
│                                          │   │      FREQUENCY ΔF         │
└────────────────────────────────────────┘   └──────────────────────────┘
ST15              │                           ST17     │
┌────────────────────────────────────────┐   ┌──────────────────────────┐
│SUPPLYING HIGH-FREQUENCY CURRENT OF DRIVE│   │  SUPPLYING HIGH-FREQUENCY │
│  FREQUENCY F_D TO CENTRAL COIL          │   │ CURRENT OF DRIVE FREQUENCY│
│        AND PERIPHERAL COIL              │   │  F_D ONLY TO CENTRAL COIL │
└────────────────────────────────────────┘   └──────────────────────────┘
                  │                                    │
                  └──────────────►◄───────────────────┘
                           │
                    ┌─────────────┐
                    │     END     │
                    └─────────────┘
```

25

## Fig.10A

$\tau$: HALF CYCLE OF
COMMERCIAL POWER SOURCE

$\leftarrow \tau \rightarrow$

CENTRAL COIL

PERIPHERAL COIL

LOAD
DETECTION
PERIOD

DRIVING
PERIOD

## Fig.10B

CENTRAL COIL

PERIPHERAL COIL

## Fig.11

```
                        ( START )
                            │
        ┌───────────────────────────────────────────┐
        │         PERFORMING LOAD DETECTION          │
        │     AT FIRST DETECTION FREQUENCY Fs₁       │
 ST21   │  FOR CENTRAL COIL AND LOAD PERIPHERAL COIL │
        │     (CALCULATING RESISTANCE R₁, R₂ AND     │
        │  RESONANCE FREQUENCY Fr₁, Fr₂ THEREOF)     │
        └───────────────────────────────────────────┘
                            │
          NO   ST22      DETERMINING
        ◇───────  WHETHER PAN STANDS OVER  ◇
                    CENTRAL COIL?
                         │ YES
          ST23         DETERMINING                      NO
        ◇─────  WHETHER PAN STANDS OVER  ◇──────────▶ (A)
                   PERIPHERAL COIL?
                         │ YES
```

$ST21$ — PERFORMING LOAD DETECTION AT FIRST DETECTION FREQUENCY $Fs_1$ FOR CENTRAL COIL AND LOAD PERIPHERAL COIL (CALCULATING RESISTANCE $R_1$, $R_2$ AND RESONANCE FREQUENCY $Fr_1$, $Fr_2$ THEREOF)

$ST22$ — NO — DETERMINING WHETHER PAN STANDS OVER CENTRAL COIL? — YES

$ST23$ — DETERMINING WHETHER PAN STANDS OVER PERIPHERAL COIL? — NO → (A) — YES

$ST24$ — DEFINING SECOND DETECTION FREQUENCY $Fs_2$ AS HIGHER ONE OF CALCULATED RESONANCE FREQUENCY $Fr_1$, $Fr_2$ PLUS A PREDETERMINED ADDITIVE FREQUENCY $\Delta F$, AND THEN PERFORMING SECOND LOAD DETECTION AT SECOND DETECTION FREQUENCY $Fs_2$ FOR CENTRAL COIL AND LOAD PERIPHERAL COIL (CALCULATING RESISTANCE $R_1'$, $R_2'$ AND RESONANCE FREQUENCY $Fr_1'$, $Fr_2'$ THEREOF)

$ST25$ — NO — DETERMINING WHETHER PAN STANDS OVER CENTRAL COIL? — YES

$ST26$ — DETERMINING WHETHER PAN STANDS OVER PERIPHERAL COIL? — NO → (B) — YES

$ST27$ — DEFINING DRIVE FREQUENCY $F_D'$ AS HIGHER ONE OF CALCULATED RESONANCE FREQUENCY $Fr_1'$, $Fr_2'$ PLUS A PREDETERMINED ADDITIVE FREQUENCY $\Delta F$

$ST28$ — SUPPLYING HIGH-FREQUENCY CURRENT OF DRIVE FREQUENCY $F_D'$ TO CENTRAL COIL AND PERIPHERAL COIL

( END )

# Fig.12A

(A)

ST31

DEFINING SECOND DETECTION FREQUENCY $Fs_2$ AS CALCULATED RESONANCE FREQUENCY $Fr_1$ PLUS A PREDETERMINED ADDITIVE FREQUENCY $\Delta F$, AND THEN PERFORMING LOAD DETECTION AT SECOND DETECTION FREQUENCY $Fs_2$ FOR CENTRAL COIL AND LOAD PERIPHERAL COIL (CALCULATING RESISTANCE $R_1'$ AND RESONANCE FREQUENCY $Fr_1'$ THEREOF)

ST32

DETERMINING WHETHER PAN STANDS OVER CENTRAL COIL? — NO

YES

ST33

DEFINING DRIVE FREQUENCY $F_D'$ AS CALCULATED RESONANCE FREQUENCY $Fr_1'$ PLUS A PREDETERMINED ADDITIVE FREQUENCY $\Delta F$

ST34

SUPPLYING HIGH-FREQUENCY CURRENT OF DRIVE FREQUENCY $F_D'$ ONLY TO CENTRAL COIL

END

# Fig.12B

(B)

ST35

DEFINING DRIVE FREQUENCY $F_D'$ AS CALCULATED RESONANCE FREQUENCY $Fr_1'$ PLUS A PREDETERMINED ADDITIVE FREQUENCY $\Delta F$

ST36

SUPPLYING HIGH-FREQUENCY CURRENT OF DRIVE FREQUENCY $F_D'$ ONLY TO CENTRAL COIL

END

Fig. 13

Fig. 14

## Fig.15

START

ST41 — PERFORMING LOAD DETECTION AT FIRST DETECTION FREQUENCY $Fs_1$ FOR EACH OF HEATING COILS (CALCULATING RESISTANCE $R_i$ AND RESONANCE FREQUENCY $Fr_i$ THEREOF)

ST42 — DETERMINING IN FIRST LOAD DETECTION WHETHER PAN STANDS OVER AT LEAST ONE HEATING COILS ?

NO

YES

ST43 — DEFINING SECOND DETECTION FREQUENCY $Fs_2$ AS HIGHEST ONE OF CALCULATED RESONANCE FREQUENCY $Fr_i$ PLUS A PREDETERMINED ADDITIVE FREQUENCY $\Delta F$, AND THEN PERFORMING SECOND LOAD DETECTION AT SECOND DETECTION FREQUENCY $Fs_2$ FOR CENTRAL COIL AND LOAD PERIPHERAL COIL (CALCULATING RESISTANCE $R_i'$ AND RESONANCE FREQUENCY $Fr_i'$ THEREOF)

ST44 — DETERMINING SECOND LOAD DETECTION WHETHER PAN STANDS OVER AT LEAST ONE HEATING COILS ?

NO

YES

ST45 — DEFINING DRIVE FREQUENCY $F_D'$ AS HIGHEST ONE OF CALCULATED RESONANCE FREQUENCY $Fr_i$ PLUS A PREDETERMINED ADDITIVE FREQUENCY $\Delta F$

ST46 — SUPPLYING HIGH-FREQUENCY CURRENT OF DRIVE FREQUENCY $F_D'$ TO EACH OF HEATING COILS

END

*Fig.16*

τ :HALF CYCLE OF COMMERCIAL POWER SOURCE

CENTRAL COIL 22a
PERIPHERAL COIL 22b
PERIPHERAL COIL 22c
PERIPHERAL COIL 22d
PERIPHERAL COIL 22e

FIRST LOAD DETECTION PERIOD

SECOND LOAD DETECTION PERIOD

DRIVING PERIOD

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009238575 A
- JP 2008293871 A
- WO 2009090152 A
- JP 3460997 B